# EUROPÄISCHE PATENTSCHRIFT

(11) **EP 0 865 960 B1**
(45) Veröffentlichungstag und Bekanntmachung des Hinweises auf die Patenterteilung: **18.07.2001**
(21) Anmeldenummer: 98104423.3
(22) Anmeldetag: 12.03.1998
(51) Int. Cl.: B60N 2/42

(54) **Fahrzeugsitz**
Motor car seat
Siège pour automobile

(30) Priorität: 21.03.1997 DE 19711944
(43) Veröffentlichungstag der Anmeldung: 23.09.1998
(73) Patentinhaber: Girsberger Holding AG, 4922 Bützberg (CH)
(72) Erfinder: Hegner, Christian, 8133 Esslingen (CH); Girsberger, Jürg, 8309 Oberwil-Nürnsdorf (CH)
(74) Vertreter: Patent- und Rechtsanwaltssozietät, Maucher, Börjes & Kollegen

(56) Entgegenhaltungen:
- WO-A-97/10117
- FR-A- 2 224 322
- US-A- 3 802 737
- US-A- 5 558 399

## Beschreibung

Die Erfindung betrifft einen Fahrzeugsitz mit einer Rückenlehne mit Kopfstütze sowie mit einem eine Sitzfläche aufweisenden Sitzteil, die an ihren einander zugewandten Enden miteinander verbunden sind und mit einem Trägerteil, das durch Schiebe- oder Zwangsführungen gebildete Verbindungsstellen für die Rückenlehne und das Sitzteil aufweist, in welchen Verbindungsstellen die Rückenlehne und das Sitzteil verschiebbar geführt sowie in verschiedenen Stellpositionen mittels einer Halteübertragung festlegbar sind.

Derartige Fahrzeugsitze werden beispielsweise auch in Kleinwagen eingebaut, die sich zunehmender Beliebtheit erfreuen. Da insbesondere solche Kleinwagen bei Frontal- oder Heckkollisionen eine vergleichsweise kurze Knautschzone haben, entwickelt man für solche Leichtfahrzeuge umfassende Sicherheitskonzepte, welche den Fahrzeuginsassen bei einem Unfall dennoch eine möglichst große Sicherheit bieten und schwerwiegenden Personenschäden entgegenwirken sollen.

Im Rahmen solcher umfassender Sicherheitskonzepte kommt auch dem Fahrzeugsitz eine entscheidende Bedeutung zu. Generell werden Fahrzeugsitze mit Kopfstützen empfohlen, welche bei einer Heckkollision den Benutzer im Halswirbelsäulenbereich abstützen sollen. Man hat auch bereits eine Kopfstütze entwickelt, die bei einer Heckkollision in Richtung zum Kopf nach vorne geschleudert wird, um den Kopf frühzeitig aufzufangen.

Aus der US-A-5,558,399 ist bereits ein Fahrzeugsitz bekannt, der ein eine Sitzfläche aufweisendes Sitzteil, eine Rückenlehne sowie ein zwischen Sitzteil und Rückenlehne gelenkig gehaltenes Lumbalteil hat. Der vorbekannte Fahrzeugsitz soll nicht nur einen größtmöglichen Komfort, sondern darüber hinaus auch zusätzliche Sicherheit während eines Frontalcrashs bieten. Während die Rückenlehne unabhängig von Sitz- und Lumbalteil grundsätzlich starr an einem Trägerteil gehalten ist, ist das Sitzteil an diesem Trägerteil in einer nach vorne weisenden, schräg nach oben orientierten Zwangsführung verschieblich geführt. Diese Zwangsführung bewirkt, daß das Sitzteil sich mit seiner vorderen freien Stirnseite während eines Frontalcrashes durch eine crashbedingte Krafteinwirkung durch den Benutzer derart nach vorn und schräg nach oben bewegt, daß der Benutzer zwangsläufig eine angewinkelte Beugestellung einnimmt und gegen ein Untertauchen unter den Sitzgurt, das sogenannte "submarining", weitgehend gesichert ist. Da das Lumbalteil mit dem Sitzteil gelenkig verbunden ist, wird das Lumbalteil bei einer Sitzflächenverstellung mitgeführt und in eine dem Benutzer genehmere Sitzposition gebracht, ohne daß der Benutzer den Sitzkontakt zur Sitzfläche und zum Lumbalteil verliert.

Der aus US-A-5,558,399 vorbekannte Fahrzeugsitz mag zwar zusätzliche Sicherheit im Falle eines Frontalcrashes bieten, - die dem Benutzer bei einer Heckkollision drohenden Gefahren sind damit jedoch nicht gelöst. Zwar kann das Lumbalteil mit dem Sitzteil mitbewegt und verstellt werden, - eine komfortable Sitzposition ist damit jedoch nicht gefunden. Vielmehr ist dazu noch der Sitzwinkel insbesondere zwischen Rückenlehne und Sitzteil durch Verstellen und Fixieren der zwischen Rückenlehne und Trägerteil vorgesehenen Relativposition zu verändern, was jedoch die Handhabung des vorbekannten Fahrzeugsitzes und die Auswahl einer als angenehm empfundenden Sitzposition wesentlich erschwert.

Man kennt auch bereits einen Fahrzeugsitz, bei dem das Sitzteil mit der Rückenlehne über ein Tragteil gelenkig verbunden ist, das der Rückenlehne während einer Heckkollision mittels einer crashbedingten Krafteinwirkung durch den Benutzer eine Schiebe-Dreh-Bewegung vorgibt. Diese Schiebe-Dreh-Bewegung bewirkt eine Hebe- und Schwenkbewegung der Rückenlehne, so daß diese sich im Bereich ihrer integrierten Kopfstütze nach vorne bewegt und den unfallbedingt rückschleudernden Kopf des Benutzers in einer vorgeschwenkten Sicherungsposition auffängt (vgl. WO 97/10117). Auch dieser vorbekannte Fahrzeugsitz wiederum bietet dem Anwender nur im Falle einer Heckkollision eine zusätzliche Sicherheit, während das Gefährdungspotential bei Frontalcrashs für den Benutzer unverändert fortbesteht. Da das gelenkig zwischen Sitzteil und Rückenlehne angeordnete Trägerteil nur dem Benutzer eine zusätzliche Sicherheit in bestimmten Gefährdungslagen bieten soll und da zur Komfortverstellung zwischen Sitzteil und Rückenlehne separate Verstellmechanismen erforderlich sind, ist der Aufwand in Handhabung und Konstruktion des vorbekannten Fahrzeugsitzes vergleichsweise hoch.

Schließlich ist aus der FR-A-2 224 322 ein Fahrzeugsitz bekannt, bei dem das Sitzteil und die Rückenlehne praktisch als starre Einheit in einem Trägerteil verschwenkbar geführt sind. Während eines Frontalcrashs kann die aus Sitzteil und Rückenlehne bestehende Einheit im Trägerteil derart verschwenken, daß der Sitz mit der vorderen freien Stirnseite des Sitzteils nach oben kippt. Durch diese Schwenk- und Kippbewegung wird ebenfalls dem sogenannten "submarining" des Benutzers während des Frontalcrashs entgegengewirkt. Die aus Sitzteil und Rückenlehne bestehende Einheit erfordert jedoch einen vergleichsweise großen Schwenkbereich und damit auch einen hohen Platzbedarf, der im Fahrzeuginneren insbesondere eines Kleinwagens meist nicht zur Verfügung steht. Im übrigen bietet dieser Fahrzeugsitz bei Heckkollisionen keine zusätzlichen Vorteile und auch der Sitzkomfort wird durch diese vorbekannte Konstruktion nicht, jedenfalls nicht positiv beeinflußt.

Es besteht daher insbesondere die Aufgabe, einen Fahrzeugsitz der eingangs erwähnten Art zu schaffen, der dem Benutzer nicht nur einen höchstmöglichen Komfort, sondern auch eine größtmögliche Sicherheit sowohl bei Frontalcrashs als auch bei Heckkollisionen bietet.

Diese Aufgabe wird durch die Merkmale des Patentanspruches 1 gelöst.

Bei einer Frontalkollision wirkt auf den Körper des Benutzers eine nach vorne gerichtete Beschleunigungskraft die über das Becken des Benutzers auch auf das Sitzteil des erfindungsgemäßen Sitzes ein nach vorne gerichtetes Kraftmoment ausübt. Dieses Kraftmoment bewegt das Sitzteil des erfindungsgemäßen Fahrzeugsitzes in seiner Zwangsführung nach vorne und nach oben, wobei die Halteübertragung zwischen Sitz und Trägerteil entsprechend nachgibt. Durch diese Bewegung des Sitzteiles von der ursprünglich gewählten Ausgangsstellung in die demgegenüber erhöhte Sicherheitsstellung und die infolgedessen geänderte Sitzposition des Benutzers werden die Belastungen auf das Becken reduziert und ein Untertauchen des Benutzers unter den Sitzgurt, das sogenannte "submarining", verhindert.

Durch die relativ weit oben angesetzte Aufhängung der Rückenschale beziehungsweise der Rückenlehne mit wirksamem Hebelarm beabstandet zur crashbedingten Krafteinleitungsstelle des Beckenbereiches ergibt sich bei einer Heckkollision eine generell verbesserte Momentenverteilung und damit verbunden ein sequentiell günstigerer Bewegungsablauf der Rückenlehne. Da die Zwangsführung der Rückenlehne als Dreh-Schiebeführung ausgebildet ist, drückt das Becken des Benutzers während einer Heckkollision derart gegen den zwischen Sitzteil und Rückenlehnen-Aufhängung befindlichen Bereich der Rückenlehne, daß die an der Rückenlehne vorgesehene Kopfstütze zum Benutzer verschwenkt und dessen Kopf auffängt.

Da das Sitzteil und die damit verbundene Rückenlehne an Verbindungsstellen des Trägerteiles gehalten sind, die jeweils durch Schiebe- oder Zwangsführungen gebildet sind, in denen die Rückenlehne und das Sitzteil verschiebbar geführt sowie in verschiedenen Stellpositionen mittels einer Halteübertragung festlegbar sind und da für die Bewegung von einer vorgegebenen Ausgangsstellung in eine Sicherheitsstellung bei einer crashbedingten Krafteinwirkung die bei festgelegter Sitzposition wirksame Halteübertragung zwischen Sitz- und Trägerteil energieabsorbierend nachgiebig ist, vereint der erfindungsgemäße Sitz größtmöglichen Komfort und zusätzliche Sicherheit bei Frontalcrashs und Heckkollisionen in einem.

Die Rückenlehne und das Sitzteil sind somit jeweils in den Zwangsführungen des Trägerteils verschiebbar geführt, welches als Sitzträger dient. Während der zwischen dem Sitzteil und der Rückenlehne vorgesehene Gelenkbereich freischwebend angeordnet ist, können die Rückenlehne und das damit verbundene Sitzteil in ihren Zwangsführungen vom Benutzer vorzugsweise stufenlos in eine individuell bevorzugte Verstellposition gebracht und darin festgelegt werden.

Dabei wird die gewählte Verstellposition durch Festlegen der Halteübertragung zwischen dem im wesentlichen aus Rückenlehne und Sitzteil bestehenden Sitz einerseits und dem Trägerteil andererseits fixiert. Der erfindungsgemäße Fahrzeugsitz läßt sich somit innerhalb eines weiten Bereiches seiner Zwangsführungen individuell in einer bequemen Sitzposition einstellen.

Bei einer Heck- oder Frontalkollision des Fahrzeuges wird durch das Körpergewicht des Benutzers eine Krafteinwirkung auf den Sitz ausgeübt, die dazu führt, daß sich die Rückenlehne und/oder das Sitzteil in den Zwangsführungen von der individuell gewählten Ausgangsstellung in eine Sicherheitsstellung bewegen. Damit der Sitz in einer Crashsituation diese begrenzte Bewegung durchführen kann, ist die Halteübertragung zwischen Sitz- und Trägerteil um ein definiertes Maß nachgiebig und energieabsorbierend ausgebildet.

Dabei kann die Halteübertragung beispielsweise ein zwischen Sitz- und Trägerteil wirksames Gestänge aufweisen, in welchem Soll-Biegestellen oder dergleichen vorgesehen sind. Somit zeichnet sich der erfindungsgemäße Sitz durch einen größtmöglichen Sitzkomfort und eine höchstmögliche Sicherheit aus.

Um bei einer Heckkollision die Beckenbewegung auf die Rückenlehne übertragen und um die Rückschleuderbewegung des Kopfes auffangen zu können, ist es vorteilhaft, wenn der dem Benutzer zugewandte Bereich der Rückenlehne zwischen deren Kulissenführung und ihrem unteren Endbereich und/oder im Bereich der Kopfstütze mit vergleichsweise geringer Nachgiebigkeit ausgebildet ist. Dabei sieht eine bevorzugte Ausführungsform gemäß der Erfindung vor, daß die Polsterung der Rückenlehne etwa im Brustbereich des Benutzers im Vergleich zum Beckenbereich weich ausgebildet ist. Eine weiche Polsterung im Brustbereich bewirkt, daß die Abstützung von Rücken, Hals und Kopf weitgehend gleichzeitig erfolgt. Insbesondere ist damit eine Zonenpolsterung mit drei Zonen -1. Zone: Becken mit harter Polsterung, 2.Zone: Brustwirbel mit weicher Polsterung, 3.Zone: Kopf mit harter Polsterung - geschaffen, die im Falle eines Heckaufpralls die sequentiell richtige Krafteinleitung in die Rückenschale unterstützt und, wie bereits vorerwähnt, für eine möglichst zeitgleiche Abstützung der Wirbel insbesondere im oberen Bereich sorgt. Außerdem wird anfänglich eine tendenzielle Vorwärtsbewegung oder ein zumindest stationäres Verhalten der Kopfstütze bewirkt.

Vorteilhaft ist es, wenn die Anordnung der Rückenlehnen-Zwangsführung am Trägerteil und/oder die Polsterung der Rückenlehne und/oder die Steifigkeit der Rückenlehne für ein Initialverhalten der Rückenlehne zumindest mit Lagebeibehaltung der Kopfstütze in einer Abfangstellung für den Kopf, vorzugsweise für eine Vorwärtsbewegung sowie eine nachfolgende Rückbewegung in eine Stützstellung vorgesehen beziehungsweise dimensioniert sind. Die Rückenlehnen-Zwangsführung sollte dabei mit Abstand oberhalb der zwischen Rückenlehne und Sitzteil vorgesehenen Gelenkachse, vorzugsweise oberhalb des Beckens des Sitzbenutzers angeordnet sein, so daß die Rückbewegung des Beckens bei einer Heckkollision der Rückfallbewegung des Kopfes zumindest im Sinne einer Lagebeibehaltung der Kopfstütze entgegengesetzt wird. Besonders vorteilhaft ist es jedoch, wenn die Anordnung der Rückenlehnen-Zwangsführung so gewählt wird, daß die Rückbewegung des Beckens in eine Vorwärtsbewegung der Kopfstütze umgesetzt wird, welche den Kopf des Benutzers frühzeitig abstützt, und wenn dieser Vorwärtsbewegung anschließend eine Rückbewegung der Rückenlehne folgt, wodurch die Belastungen auf Hals und Kopf verringert werden. Dieser Bewegungsablauf der Rückenlehne von ihrer Ausgangsstellung in eine Sicherheitsstellung wird durch die oben beschriebene Polsterung der Rückenlehne unterstützt, die im Becken- und Kopfbereich des Benutzers eine vergleichsweise geringe Nachgiebigkeit hat und im Brustbereich demgegenüber weicher gepolstert sein sollte. Für das angestrebte Initialverhalten der Rückenlehne muß diese ausreichend steif und belastbar ausgebildet sein.

Eine Optimierung der Ergonomie einerseits und des Crashverhaltens bei Heckkollisionen andererseits wird begünstigt, wenn die Zwangsführung der Rückenlehne etwa geradlinig in Längsrichtung der Rückenlehne verläuft.

Um die Sitzflächenvorderkante auch über eine vergleichsweise kurze Schiebestrecke der Zwangsführung ausreichend steil aufrichten zu können, ist es vorteilhaft, wenn die Zwangsführung des Sitzteiles gekrümmt mit einem etwa auf das Hüftgelenk des Benutzers bezogenen Krümmungsradius verläuft.

Um der Rückenlehne sowie dem Sitzteil eine ausreichende Stabilität zu geben, ist es vorteilhaft, wenn die Rückenlehne und das Sitzteil eine Rücken- beziehungsweise Sitzschale aufweisen und wenn die Kopfstütze vorzugsweise integraler Bestandteil der Rückenschale ist.

Eine bevorzugte Ausführungsform gemäß der Erfindung sieht vor, daß die Rückenlehne und das Sitzteil an ihren einander zugewandten Enden schwenkbar miteinander verbunden sind, daß die Rückenlehne und das Sitzteil mit Abstand von ihrer gemeinsamen freischwebenden Schwenkachse in ihren Zwangsführungen am Trägerteil gehalten sind und daß die Zwangsführung auch des Sitzteiles als Dreh-Schiebeführung ausgebildet ist.

Zusätzliche Ausgestaltungen der Erfindung sind in den weiteren Unteransprüchen aufgeführt. Nachstehend ist die Erfindung mit ihren wesentlichen Einzelheiten anhand der Zeichnungen noch näher erläutert.

Es zeigt:
- Fig. 1: einen Fahrzeugsitz, der eine Rückenlehne sowie ein damit gelenkig verbundenes Sitzteil hat, welche jeweils in einer Zwangsführung an einem Trägerteil gehalten sind, wobei in gestrichelten Linien der Bewegungsablauf im Falle einer Heckkollision dargestellt ist,
- Fig. 2: den Bewegungsablauf von Rückenlehne und Sitzteil des Fahrzeugsitzes aus Figur 1 im Falle einer Heckkollision in schematischer Darstellung,
- Fig. 3: den Fahrzeugsitz aus Figur 1, wobei in gestrichelten Linien der Bewegungsablauf im Falle einer Frontalkollision dargestellt ist und
- Fig. 4: den Bewegungsablauf von Rückenlehne und Sitzteil des Fahrzeugsitzes aus Figur 1 und 3 im Falle einer Frontalkollision in schematischer Darstellung.

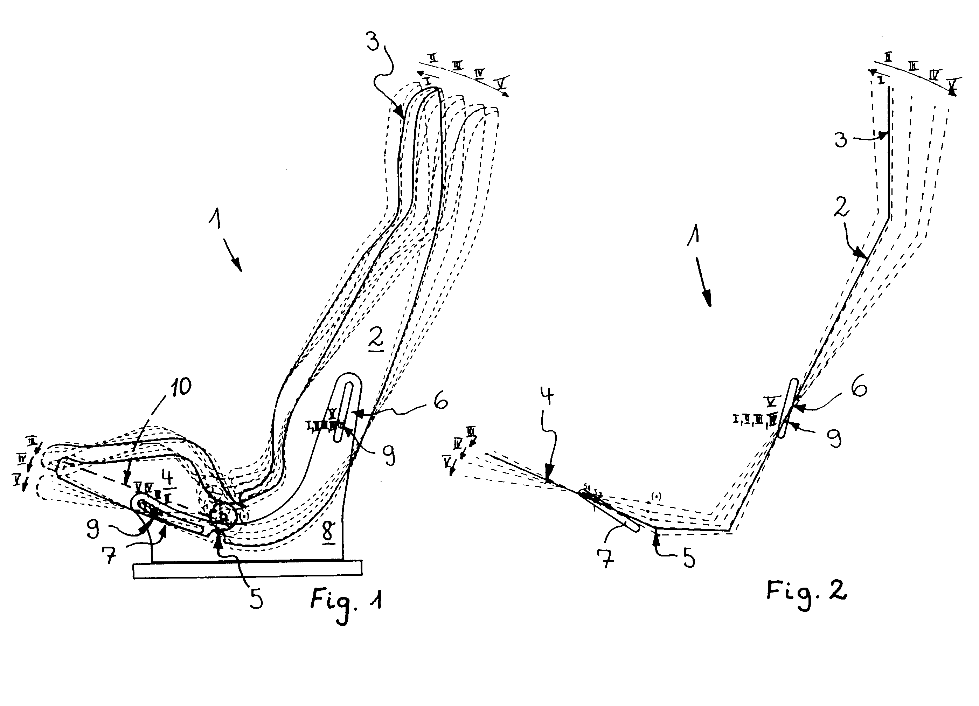

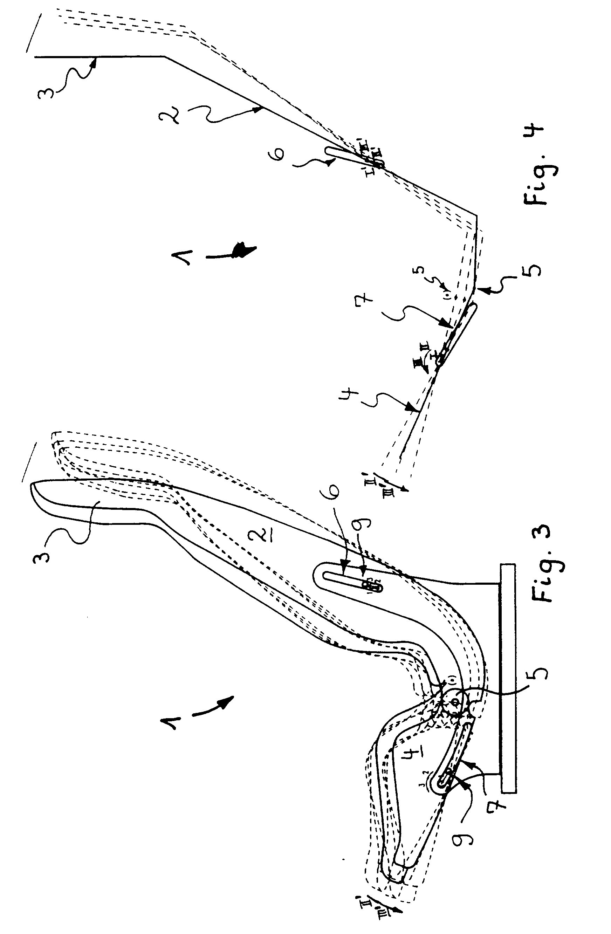

In Figur 1 und 3 ist ein Fahrzeugsitz 1 dargestellt, der eine Rückenlehne 2 mit integrierter Kopfstütze 3 sowie ein Sitzteil 4 hat. Die Rückenlehne 2 und das Sitzteil 4 sind an ihren einander zugewandten Endbereichen gelenkigmiteinander verbunden. Mit Abstand von dieser gemeinsamen freischwebenden Gelenkachse 5 sind die Rückenlehne 2 und das Sitzteil 4 jeweils in Zwangsführungen 6, 7 an einem Trägerteil 8 gehalten, welches am Fahrzeugboden verankert ist.

Damit der Benutzer den Fahrzeugsitz 1 stufenlos in eine ihm genehme Sitzposition verstellen kann, sind die Rückenlehne 2 und das Sitzteil 4 in den Zwangsführungen 6, 7 des Trägerteils 8 verschiebbar geführt. Dabei kann die gewählte Verstellposition durch eine nicht weiter dargestellte Halteübertragung festgestellt werden, die sich im wesentlichen unter dem Sitzteil 4 befindet.

Da die Gelenkachse 5 und somit die Verbindung zwischen Rückenlehne 2 und Sitzteil 4 unabhängig vom Trägerteil 8 und daher freischwebend ist, kann der Fahrzeugsitz 1 körpergerecht an jede beliebige Sitzhaltung angepaßt werden.

Wie die Figuren 1 und 3 zeigen, ist die Gelenkachse 5 zwischen Rückenlehne 2 und Sitzteil 4 am nächst gelegenen Punkt des Hüftgelenkes angeordnet. Damit wird die synchrone Bewegung von Körper und Sitz optimiert und der Hemdauszieheffekt minimiert. Da die Zwangsführung 7 des Sitzteiles 4 als Dreh-Schiebeführung ausgebildet ist und da das Sitzteil 4 somit auch drehend gelagert ist, wird eine zusätzliche Federung bewirkt.

Die Zwangsführungen 6, 7 sind ausgehend vom Hüftgelenk festgelegt, weshalb sich der Fahrzeugsitz 1 bei Freigabe der zwischen Sitz und Trägerteil 8 vorgesehenen Halteübertragung praktisch automatisch an den Körper anpaßt. Durch Lösen der Halteübertragung und bewußtes Einnehmen der gewünschten Sitzhaltung kann der Benutzer demnach die Lage von Rückenlehne 2 und Sitzteil 4 bestimmen.

Der hier dargestellte Fahrzeugsitz 1 zeichnet sich nicht nur durch seine ausgeprägte Ergonomie aus, sondern bietet dem Benutzer auch eine größtmögliche Sicherheit. Dazu wird die bei einer Heck- oder Frontalkollision des Fahrzeuges durch das Körpergewicht des Benutzers ausgeübte Krafteinwirkung in eine Sicherungsbewegung der Rückenlehne 2 oder des Sitzteiles 4 umgesetzt, welche sich dabei in ihren Zwangsführungen 6, 7 von der ursprünglich gewählten Ausgangsstellung in eine Sicherheitsstellung verschieben können. Damit der im wesentliche aus Rückenlehne 2 und Sitzteil 4 bestehende Sitz in einer Crashsituation diese begrenzte Bewegung durchführen kann, ist die Halteübertragung zwischen Sitz und Trägerteil 8 um ein definiertes Maß nachgiebig ausgestaltet. Dabei kann die Halteübertragung beispielsweise ein zwischen dem Sitzteil 4 und dem Trägerteil 8 wirksames Gestänge aufweisen, in welchem Soll-Biegestellen vorgesehen sind.

Wie aus Figur 1 deutlich wird, ist die der Rückenlehne 2 zugeordnete Zwangsführung 6 weit oberhalb der gemeinsamen Gelenkachse 5 und entsprechend zur Sitzfläche 10 angeordnet. Die Rückenlehne 2 wird im Bereich ihrer Zwangsführung 6 bei einer Heckkollision mit einem solchen Abstand zur Krafteinleitungsstelle des Beckenbereiches des Benutzers in die Rückenlehne 2 abgestützt, daß ein entsprechend wirksamer Hebelarm vorhanden ist.

In den Figuren 1 und 2 ist mit dem Bezugszeichen I angedeutet, daß durch das während der Heckkollision auf die Rückenlehne 2 einwirkende Becken des Benutzers zunächst ein initiales Aufrichten der Rückenlehne 2 erfolgt, die dem sich zum Sitz relativ nach hinten bewegenden Kopf des Benutzers mittels der den Kopf geringfügig nach vorn entgegenkommenden Kopfstütze 3 frühzeitig abfängt.

Gemäß den Bezugszeichen II bis V in Figur 1 und 2 macht anschließend der obere Teil der Rückenlehne 2 eine Relativbewegung nach hinten, womit die Belastungen auf Hals und Kopf des Benutzers verringert werden. Dabei dreht sich die Rückenlehne 2 um ihre in der Zwangsführung 6 geführte obere Achse 9, während sich das Sitzteil 4 nach vorne verschiebt. In der Sicherheits-Endstellung gemäß Bezugszeichen V kommt die Translation des Sitzteiles 4 bei Erreichen des vorderen Anschlages in der Zwangsführung 7 zum Abschluß, wobei sich das Sitzteil 4 geringfügig in die Waagrechte verdreht und die Rückenlehne 2 in ihrer Zwangsführung 6 angehoben wird. Diese Sequenz der Bewegungsabläufe gemäß den Figuren 1 und 2 bewirkt im Falle einer Heckkollision eine verbesserte Abstützung im Halswirbelsäulenbereich und verringert dementsprechend die Gefahr eines Schleudertraumas.

Während die Rückenlehne 2 im Beckenbereich sowie im Bereich der Kopfstütze 3 möglichst hart gepolstert sein sollte, um die Energie gut auf die Rückenlehne 2 übertragen zu können, ist im Brustbereich des Benutzers eine weiche Polsterung der Rückenlehne 2 vorgesehen. Ein vorzugsweise verstellbares, hier allerdings nicht dargestelltes Nackenpolster dient zur Gewährleistung einer konstanten Distanz zwischen der Kontur des oberen Wirbelbereiches und der Kontur des stützenden Rückenpolsters. Dadurch sollen bei einer Heckkollision die oberen Wirbel gleichzeitig und gleichmäßig abgestützt werden, was der Gefahr eines Schleudertraumas ebenfalls entgegenwirkt.

Während die Zwangsführung 6 der Rückenlehne 2 etwa geradlinig in Längsrichtung der Rückenlehne 2 verläuft, ist die Zwangsführung 7 des Sitzteiles 4 in die der Rückenlehne 2 abgewandte Richtung nach vorne sowie nach oben orientiert. Wie in den Figuren 3 und 4 dargestellt ist, kann sich bei einer Frontalkollision somit das Sitzteil 4 infolge des nach vorne einwirkenden Körpergewichts des Benutzers von der gewählten Ausgangsstellung in eine Sicherheitsstellung verschieben. Für diese ebenfalls nach vorne gerichtete Sicherungsbewegung des Sitzteiles 4 ist auch hier die Halteübertragung zwischen Sitz und Trägerteil 8 nachgiebig ausgestaltet.

Wie in den Figuren 3 und 4 dargestellt ist, bewegen sich das Sitzteil 4 und die Rückenlehne 2 als Sitzeinheit während einer Frontalkollision zunächst in ihren Zwangsführungen nach vorne, was entsprechend der Führungsbahn der Zwangsführung 7 mit einem Ansteigen der gesamten Sitzfläche des Sitzteiles 4 verbunden ist. Damit werden einerseits die Belastungen auf das Becken verringert und andererseits wird ein Submarining verhindert. Nach Erreichen der jeweiligen Führungsanschläge kann sich das Sitzteil 4 gemäß dem Bezugszeichen II' und III' geringfügig drehen, während sich die Rückenlehne 2 ein wenig nach oben bewegt.

Der in den Figuren 3 und 4 dargestellte Bewegungsablauf des Fahrzeugsitzes 1 verhindert, daß der Benutzer bei einer Frontalkollision unter dem Sitzgurt abtaucht. Um dies zu verhindern, weist der Fahrzeugsitz 1 die in die der Rückenlehne 2 abgewandte Richtung nach oben orientierte Zwangsführung 7 für das Sitzteil 4 auf. Bei einer Frontalkollision, bei welcher der Fahrer nach vorne geschleudert wird, kann sich somit auch das Sitzteil 4 entlang seiner Zwangsführung nach vorne und nach oben bewegen. Durch die während der Frontalkollision zunehmend nach vorne abgewinkelte Stellung des Sitzteiles 4 wird verhindert, daß der Benutzer unter den Gurt untertauchen kann. Dabei wird die in den Figuren 3 und 4 dargestellte zeitgleiche Bewegung der Rückenlehne 2 praktisch nicht genutzt, weil der Benutzer während der Frontalkollision mit seinem Oberkörper ohnehin nach vorne geschleudert wird.

Um die nach vorne orientierte Schleuderbewegung des Benutzers auf das Sitzteil 4 zu übertragen, weist das Sitzteil im Bereich seiner Sitzflächenvorderkante einen abgepolsterten Vorsprung oder eine Abstufung auf, welche die nach vorne orientierte Schleuderbewegung des Beckens auf das Sitzteil 4 überträgt.

Die Rückenlehne 2 und das Sitzteil 4 des Fahrzeugsitzes 1 sind hier als Rücken- beziehungsweise Sitzschale ausgebildet. Dabei ist die Kopfstütze 3 integraler Bestandteil der Rückenschale 2. Die der Rückenlehne 2 sowie dem Sitzteil 4. zugeordneten Zwangsführungen 6, 7 sind als Dreh-Schiebeführungen ausgebildet. An der Rückenlehne 2 sowie am Sitzteil 4 sind dazu vorzugsweise beidseits Führungsnocken 9 vorgesehen, die in den entsprechenden Führungsbahnen im Trägerteil 8 verschieblich geführt sind.

In den vorliegenden Figuren wurde die Elastizität der Sitz- und Rückenschalen nicht berücksichtigt. Aus zeichnerisch-geometrischen Gründen ist die Rotationsbewegung jeweils überhöht dargestellt, weil die Elastizität der Rückenlehne 2 nicht gebührend berücksichtigt werden konnte und sich somit die Gelenkachse 5 zu stark nach oben bewegt hat.

Der hier dargestellte Fahrzeugsitz 1 bietet dem Benutzer einen höchstmöglichen Komfort und zeichnet sich darüber hinaus auch durch eine hohe Sicherheit bei Heck- und Frontalkollisionen aus.

## Patentansprüche

1. Fahrzeugsitz (1) mit einer Rückenlehne (2) mit Kopfstütze (3) sowie mit einem eine Sitzfläche aufweisenden Sitzteil (4), die an ihren einander zugewandten Enden miteinander verbunden sind, und mit einem Trägerteil (8), das durch Schiebe- oder Zwangsführungen (6, 7) gebildete Verbindungsstellen für die Rückenlehne (2) und das Sitzteil (4) aufweist, in welchen Verbindungsstellen die Rückenlehne (2) und das Sitzteil (4) verschieblich geführt sowie in verschiedenen Stellpositionen mittels einer Halteübertragung festlegbar sind, wobei die Rückenlehne (2) während einer Heckkollision und das Sitzteil (4) während einer Frontalkollision mittels einer crashbedingten Krafteinwirkung durch den Benutzer des Sitzes von einer vorgegebenen Ausgangsstellung in eine Sicherhertsstellung bewegbar ist, wozu der Rückenlehne (2) am Trägerteil (8) eine als Dreh-Schiebeführung ausgebildete und als Verbindungsstelle dienende Zwangsführung (6) zugeordnet ist, die eine oberhalb der Sitzfläche angeordnete Abstützung für die Rückenlehne (2) mit wirksamen Hebelarm beabstandet zur Krafteinleitungsstelle des Beckenbereiches in die Rückenlehne bildet, wozu das Sitzteil (4) mit einer von der Rückenlehne (2) nach vorne wegweisenden, schräg nach oben orientierten Führung verbunden ist und wozu für die Bewegung von einer vorgegebenen Ausgangsstellung in eine Sicherheitsstellung bei einer crashbedingten Krafteinwirkung die bei festgelegter Sitzposition wirksame Halteübertragung zwischen Sitz- und Trägerteil energieabsorbierend nachgiebig ist.

2. Fahrzeugsitz nach Anspruch 1, dadurch gekennzeichnet, daß der dem Benutzer zugewandte Bereich der Rückenlehne (2) zwischen deren Zwangsführung und ihrem unteren Endbereich und/oder im Bereich der Kopfstütze (3) mit vergleichsweise geringer Nachgiebigkeit ausgebildet ist.

3. Fahrzeugsitz nach Anspruch 1 oder 2, dadurch gekennzeichnet, daß die Polsterung der Rückenlehne (2) etwa im Brustbereich des Benutzers im Vergleich zum Beckenbereich weich ausgebildet ist.

4. Fahrzeugsitz nach einem der Ansprüche 1 bis 3, dadurch gekennzeichnet, daß die Anordnung der Rückenlehnen-Zwangsführung (6) am Trägerteil (8) und/oder die Polsterung der Rückenlehne (2) und/oder die Steifigkeit der Rückenlehne (2) für ein Initalverhalten der Rückenlehne (2) zumindest mit Lagebeibehaltung der Kopfstütze (3) in einer Abfangstellung für den Kopf, vorzugsweise für eine Vorwärtsbewegung sowie eine nachfolgende Rückbewegung in eine Stützstellung vorgesehen beziehungsweise dimensioniert sind.

5. Fahrzeugsitz nach einem der Ansprüche 1 bis 4, dadurch gekennzeichnet, daß die Zwangsführung (6) der Rückenlehne (2) etwa geradlinig in Längsrichtung der Rückenlehne (2) verläuft.

6. Fahrzeugsitz nach einem der Ansprüche 1 bis 5, dadurch gekennzeichnet, daß die Zwangsführung (7) des Sitzteiles (4) gekrümmt mit einem etwa auf das Hüftgelenk des Benutzers bezogenen Krümmungsradius verläuft.

7. Fahrzeugsitz nach einem der Ansprüche 1 bis 6, dadurch gekennzeichnet, daß die Rückenlehne (2) und das Sitzteil (4) eine Rücken- beziehungsweise Sitzschale aufweisen und daß die Kopfstütze (3) vorzugsweise integraler Bestandteil der Rückenschale ist.

8. Fahrzeugsitz nach einem der Ansprüche 1 bis 7, dadurch gekennzeichnet, daß die Rückenlehne (2) und das Sitzteil (4) an ihren einander zugewandten Enden schwenkbar miteinander verbunden sind, daß die Rückenlehne (2) und das Sitzteil (4) mit Abstand von ihrer gemeinsamen freischwebenden Gelenkachse (5) in ihren Zwangsführungen (6, 7) am Trägerteil (8) gehalten sind, und daß die Zwangsführung (7) auch des Sitzteiles (4) als Dreh-Schiebeführung ausgebildet ist.

## Claims

1. Vehicle seat (1) having a backrest (2) with headrest (3) and having a seat portion (4) comprising a sitting surface, which are attached to one another at their associated ends, and having a carrier portion (8) which comprises connecting points for the backrest (2) and seat portion (4) formed by sliding or positive guides (6, 7), the backrest (2) and the seat portion (4) being movably guided in these connecting points and fixable in various positions of adjustment by means of a retaining transmission, the backrest (2) being movable during a rear collision and the seat portion (4) being movable during a frontal collision from a given starting position into a safety position by means of a crash-induced force produced by the occupant of the seat, for which purpose the backrest (2) has an associated positive guide (6) on the carrier portion (8), constructed as a rotary sliding guide and serving as a connecting point, said positive guide forming a support for the backrest (2) located above the sitting surface with an effective lever arm spaced from the point of introduction of the force of the pelvic region into the backrest, for which purpose the seat portion (4) is connected to a guide pointing forwards away from the backrest (2) and oriented diagonally upwards and, for moving from a given starting position into a safety position under the effect of the force produced by the crash, the retaining transmission between the seat portion and carrier portion which is effective with a fixed seat position is adapted to yield so as to absorb energy.

2. Vehicle seat according to claim 1, characterised in that the part of the backrest (2) facing the occupant is constructed to yield comparatively little between its positive guide and its lower end region and/or in the region of the headrest (3).

3. Vehicle seat according to claim 1 or 2, characterised in that the padding of the backrest (2) approximately in the chest region of the user is soft compared with the pelvic region.

4. Vehicle seat according to one of claims 1 to 3, characterised in that the arrangement of the positive guide (6) for the backrest on the carrier part (8) and/or the padding of the backrest (2) and/or the rigidity of the backrest (2) are designed or dimensioned for the backrest (2) to behave initially at least with the headrest (3) maintained in a position for restraining the head, preferably moving forwards and then backwards into a support position.

5. Vehicle seat according to one of claims 1 to 4, characterised in that the positive guide (6) of the backrest (2) extends substantially in a straight line in the longitudinal direction of the backrest (2).

6. Vehicle seat according to one of claims 1 to 5, characterised in that the positive guide (7) of the seat portion (4) is curved with a radius of curvature relating approximately to the hip joint of the occupant.

7. Vehicle seat according to one of claims 1 to 6, characterised in that the backrest (2) and seat portion (4) have a back hollow and seat hollow, respectively, and the headrest (3) is preferably an integral part of the back hollow.

8. Vehicle seat according to one of claims 1 to 7, characterised in that the backrest (2) and the seat portion (4) are pivotally connected to one another at their associated ends, the backrest (2) and seat portion (4) are held in their positive guides (6, 7) on the carrier portion (8) at a spacing from their common free-floating articulation spindle (5), and in that the positive guide (7) of the seat portion (4) too is constructed as a rotary sliding guide.

## Revendications

1. Siège (1) pour véhicule automobile comprenant un dossier (2) avec appui-tête (3), ainsi qu'une assise (4) présentant une surface d'assise, qui sont reliés entre eux par leurs extrémités tournées l'une vers l'autre, comprenant également un élément de support (8) qui présente des points d'assemblage pour le dossier (2) et l'assise (4) constitués par des guidages coulissés ou forcés, points d'assemblage dans lesquels le dossier (2) et l'assise (4) sont guidés de manière coulissante et peuvent être immobilisés dans différentes positions de réglage au moyen d'une liaison de fixation, sachant que, lors d'une collision par l'amère, le dossier (2) et, lors d'une collision frontale, l'assise (4) peut être déplacé(e) par la force due à la collision et exercée par l'utilisateur du siège d'une position de départ préalablement définie dans une position de sécurité, et, dans ce but,
- un guidage forcé (6) situé sur l'élément de support (8), qui est réalisé en tant que guidage rotatif et coulissant et qui sert de point d'assemblage, est associé au dossier (2) et constitue un appui pour le dossier (2) situé au-dessus de la surface d'assise, lequel appui a un bras de levier efficace éloigné du point où la force exercée par le bassin se transmet au dossier,
- l'assise (4) est reliée à un guidage partant du dossier (2) vers l'avant en étant orienté en biais vers le haut,
- et enfin, pour le déplacement d'une position de départ préalablement définie dans une position de sécurité lors de l'application d'une force due à une collision, la liaison de fixation entre assise et élément de support, qui est active lorsque la position de l'assise et bloquée, est élastique afin d'absorber l'énergie.

2. Siège de véhicule automobile selon la revendication 1, caractérisé en ce que la zone du dossier (2) qui est tournée vers l'utilisateur est réalisée avec une élasticité comparativement moindre entre le guidage forcé du dossier et sa partie d'extrémité inférieure et/ou dans la zone de l'appui-tête (3).

3. Siège de véhicule automobile selon la revendication 1 ou 2, caractérisé en ce que le rembourrage du dossier (2) approximativement dans la zone du thorax de l'utilisateur est souple comparé à celui de la zone du bassin.

4. Siège de véhicule automobile selon l'une des revendications 1 à 3, caractérisé en ce que le guidage forcé (6) du dossier sur l'élément de support (8) et/ou le rembourrage du dossier (2) et/ou la rigidité du dossier (2) sont prévus ou dimensionnés pour un comportement initial du dossier (3) au moins avec maintien de la position de l'appui-tête (3) dans une position d'amortissement pour la tête, de préférence pour un mouvement vers l'avant suivi d'un mouvement vers l'arrière dans une position de soutien.

5. Siège de véhicule automobile selon l'une des revendications 1 à 4, caractérisé en ce que le guidage forcé (6) du dossier (2) s'étend de façon approximativement rectiligne dans la direction longitudinale du dossier (2).

6. Siège de véhicule automobile selon l'une des revendications 1 à 5, caractérisé en ce que le guidage forcé (7) de l'assise (4) s'étend de manière courbe, avec un rayon de courbure rapporté approximativement à l'articulation de la hanche de l'utilisateur.

7. Siège de véhicule automobile selon l'une des revendications 1 à 6, caractérisé en ce que le dossier (2) et l'assise (4) présentent respectivement une coque de dossier et d'assise, et en ce que l'appui-tête (3) fait de préférence partie intégrante de la coque du dossier.

8. Siège de véhicule automobile selon l'une des revendications 1 à 7, caractérisé en ce que le dossier (2) et l'assise (4) sont reliés entre eux de façon pivotante par leurs extrémités tournées l'une vers l'autre, en ce que le dossier (2) et l'assise (4) sont maintenus dans leurs guidages forcés (6, 7) situés sur l'élément de support (8) à distance de leur axe d'articulation commun flottant librement (5), et en ce que le guidage forcé (7) de l'assise (4) est également réalisé en tant que guidage rotatif et coulissant.
